# FASCICULE DE BREVET EUROPEEN

(11) **EP 0 716 296 B1**
(45) Date de publication et mention de la délivrance du brevet: **01.03.2000**
(21) Numéro de dépôt: 95402724.9
(22) Date de dépôt: 04.12.1995
(51) Int. Cl.: G01M 3/20

(54) **Détecteur de fuite**
Leckdetektor
Leak detector

(30) Priorité: 07.12.1994 FR 9414708
(43) Date de publication de la demande: 12.06.1996
(73) Titulaire: ALCATEL, 75008 Paris (FR)
(72) Inventeur: Gevaud, Roland, F-74370 Pringy (FR); Baret, Gilles, F-74000 Annecy (FR)
(74) Mandataire: Buffière, Michelle

(56) Documents cités:
- EP-A- 0 464 292
- WO-A-94/05990

## Description

La présente invention concerne un détecteur de fuite. Plus particulièrement, l'invention concerne un détecteur utilisant une pompe secondaire à fort taux de compression permettant de mesurer de très grosses fuites en opérant par la méthode dite à contre-courant, comme décrit, par exemple, dans le document WO-A-94/05990, ainsi que des grosses fuites avec une bonne sensibilité et une excellente vitesse de pompage, et donc un faible temps de réponse.

L'invention a ainsi pour objet un détecteur de fuite comprenant une cellule d'analyse reliée à l'aspiration d'une première pompe secondaire, un groupe de prévidage relié à une bride d'entrée, l'aspiration dudit groupe de prévidage étant en outre reliée par une conduite équipée d'une première vanne au refoulement de ladite première pompe secondaire, caractérisé en ce que ledit groupe de prévidage comprend, reliées en série, une seconde pompe secondaire et une pompe mécanique primaire, et en ce qu'une conduite équipée d'une deuxième vanne relie un point intermédiaire de ladite première pompe secondaire, à l'aspiration de ladite seconde pompe secondaire.

Afin d'obtenir une bonne vitesse de pompage ainsi qu'un fort taux de compression, sous un volume le plus réduit possible, un choisit de préférence comme pompes secondaires des pompes hybrides comportant une première partie, côté aspiration, du type turbomoléculaire à ailettes procurant une très bonne vitesse de pompage et une seconde partie, côté refoulement, du type Holweck pour obtenir un bon taux de compression. Une telle construction est décrite dans EP-A-0 464 292.

Une telle pompe, connue en soi, a l'avantage d'être peu volumineuse, pour un même taux de compression, par rapport à une pompe monotype turbomoléculaire à ailettes. En effet, les étages Holweck sont disposés concentriquement à l'intérieur du rotor en forme de cloche de l'étage à ailettes. En outre, les étages Holweck sont moins coûteux que les étages à ailettes.

Enfin, l'utilisation d'une pompe secondaire dans le groupe de prévidage permet d'utiliser une pompe sèche, telle qu'une pompe à membrane comme pompe primaire. En effet, une telle pompe seule, ne permet pas d'atteindre un vide suffisant, mais son association à une pompe secondaire assure le vide nécessaire et l'ensemble des deux pompes est beaucoup plus léger, environ la moitié du poids, qu'une pompe primaire à palette, et en outre cela permet de proposer un détecteur de fuite entièrement sec, sans huile.

On va maintenant donner la description d'un exemple de mise en oeuvre de l'invention en se reportant au dessin annexé dans lequel :

La figure 1 représente le schéma d'un détecteur de fuite selon l'invention.

La figure 2 représente une pompe secondaire de type hybride qui est avantageusement utilisée pour chacune des deux pompes secondaires du détecteur de l'invention.

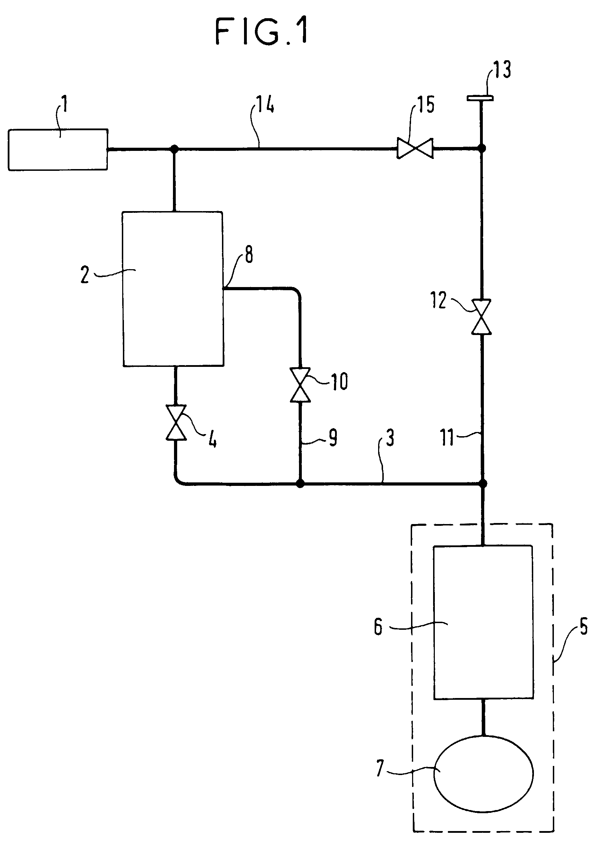

La figure 1 représente un détecteur de fuite à hélium, et il comprend une cellule d'analyse 1 telle qu'un spectromètre de masse calé sur l'hélium. La cellule 1 est reliée à une première pompe secondaire 2. Le refoulement de la pompe secondaire 2 est relié par une conduite 3, équipée d'une première vanne 4, à un groupe de prévidage 5 composé d'une seconde pompe secondaire 6 et d'une pompe primaire sèche 7 telle qu'une pompe à membrane. La première pompe secondaire 2 comporte un point intermédiaire 8 qui est relié par une conduite 9 équipée d'une deuxième vanne 10 à la conduite 3, c'est-à-dire à l'aspiration de la seconde pompe secondaire 6. Le groupe de prévidage 5 est relié par une conduite 11, équipée d'une troisième vanne 12, à une bride d'entrée 13 destinée à être reliée à une enceinte à contrôler. Enfin, une conduite 14, équipée d'une quatrième vanne 15, relie la bride d'entrée 13 à l'aspiration de la première pompe secondaire 2. Cette conduite permet d'effectuer un essai de contrôle d'étanchéité par la méthode classique, dite "en directe". Méthode très sensible, utilisée pour les fuites très faibles.

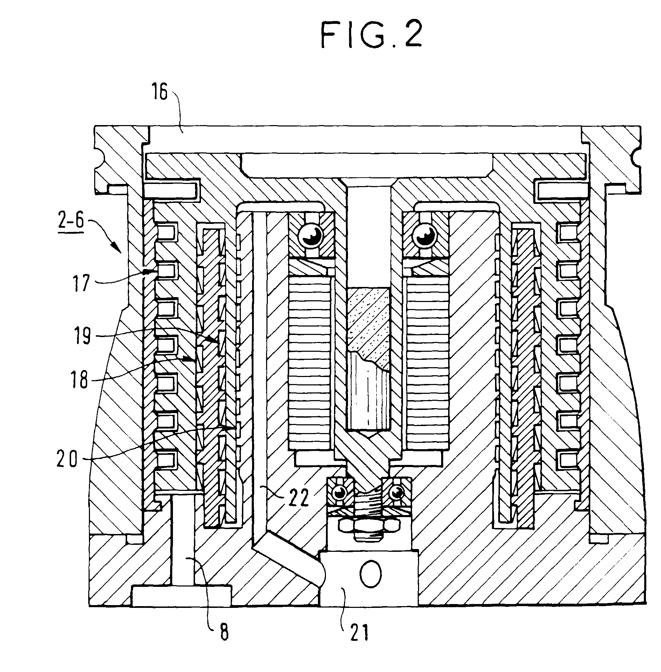

Les pompes 2 et 6 (figure 2) sont des pompes hybrides comportant, côté aspiration 16, un étage turbomoléculaire à ailettes 17 assurant un fort débit de pompage : supérieur à 20 l/s d'air, suivi, côté refoulement, de trois étages Holweck concentriques 18, 19 et 20. Le refoulement se fait en 21 à travers un canal 22.

Le point intermédiaire 8 est situé au refoulement de l'étage turbomoléculaire à ailettes 17, c'est-à-dire l'aspiration du premier étage Holweck 18. Sur la pompe 6, le point intermédiaire 8 est simplement bouché. Il peut être utilisé pour disposer une sonde de pression.

Avec un tel appareil, le prévidage de l'enceinte à contrôler est effectué par les deux pompes en série 6 et 7, vanne 12 ouverte, et vannes 15, 10 et 4 fermées.

Dès que la pression à l'entrée 13 est descendue à 50 mbar, on peut effectuer la mesure en "très grosse fuite" en ouvrant la vanne 4. En cas de fuite, la mesure est effectuée en contre-courant à travers la première pompe secondaire 2 vers le spectromètre 1. Si la pression continue à descendre et atteint une valeur inférieure à 20 mbar à l'entrée 13, on peut effectuer la mesure en "grosse fuite" en ouvrant la vanne 10, court-circuitant les étages haute pression (de type Holweck) de la première pompe secondaire 2, rendant ces étages complètement inopérants. En cas de fuite, l'hélium remonte donc la pompe 2 en contre-courant partiel : à partir du point intermédiaire 8 permettant une bonne sensibilité. Grâce aux étages turbomoléculaires à ailettes de la seconde pompe secondaire 6, on a une excellente vitesse de pompage, ce qui permet une réponse très rapide en cas de fuite. Enfin, si la pression continue à descendre, à une valeur inférieure à 4.10⁻³ mbar à l'entrée 13, indiquant une faible fuite ou bien une absence de fuite, on effectue alors le contrôle en mode "petite fuite" en fermant la vanne 10 et la vanne 12, et en ouvrant la vanne 15.

Un tel détecteur assure d'excellentes performances en sensibilité et en temps de réponse dans une gamme très élevée de fuites depuis les plus faibles, jusqu'à des fuites très élevées, de l'ordre de 1000 mbar.l/s et avec un appareil peu volumineux et de faible poids grâce à l'utilisation de pompes hybrides 2 et 6 et d'une pompe primaire 7 à membrane. L'ensemble constitue en outre un détecteur de type sec.

## Revendications

1. Détecteur de fuite comprenant au moins une cellule d'analyse (1) reliée à l'aspiration d'une première pompe secondaire (2), un groupe de prévidage (5) relié à une bride d'entrée (13), l'aspiration dudit groupe de prévidage (5) étant en outre reliée par une conduite (3) équipée d'une première vanne (4) au refoulement de ladite première pompe secondaire (2), caractérisé en ce que ledit groupe de prévidage (5) comprend, reliées en série, une seconde pompe secondaire (6) et une pompe mécanique primaire (7), et en ce qu'une conduite (9) équipée d'une deuxième vanne (10) relie un point intermédiaire (8) de ladite première pompe secondaire (2) à l'aspiration de ladite seconde pompe secondaire (6).

2. Détecteur de fuite selon la revendication 1, caractérisé en ce que ladite pompe mécanique primaire (7) est une pompe sèche.

3. Détecteur de fuite selon la revendication 2, caractérisé en ce que la pompe mécanique primaire (7) est une pompe à membrane.

4. Détecteur de fuite selon l'une des revendications 1 à 3, caractérisé en ce que lesdites première (2) et seconde (6) pompes secondaires sont des pompes hybrides comportant deux parties : une première partie, côté aspiration, du type turbomoléculaire à ailettes (17), et une seconde partie, côté refoulement, du type Holweck (18, 19, 20).

5. Détecteur de fuite selon la revendication 4, caractérisé en ce que ledit point intermédiaire (8) de ladite première pompe secondaire (2) est situé entre les deux dites parties de la pompe.

## Claims

1. A leak detector including at least one analysis unit (1) connected to the inlet of a first secondary pump (2), a pre-evacuation set (5) connected to an inlet coupling (13), the inlet of said pre-evacuation set (5) further being connected to the outlet of said first secondary pump (2) via a pipe (3) provided with a first valve (4), said leak detector being characterized in that said pre-evacuation set (5) comprises a second secondary pump (6) and a mechanical primary pump (7) connected together in series, and in that a pipe (9) provided with a second valve (10) connects an intermediate point (8) of said first secondary pump (2) to the inlet of said second secondary pump (6).

2. A leak detector according to claim 1, characterized in that said mechanical primary pump (7) is a dry pump.

3. A leak detector according to claim 2, characterized in that the mechanical primary pump (7) is a diaphragm pump.

4. A leak detector according to any one of claims 1 to 3, characterized in that said first secondary pump (2) and said second secondary pump (6) are hybrid pumps, each of which comprises two portions: a first portion, at the inlet end, of the turbomolecular blade type (17), and a second portion, at the outlet end, of the Holweck type (18, 19, 20).

5. A leak detector according to claim 4, characterized in that said intermediate point (8) of said first secondary pump (2) is situated between said two portions of the pump.

## Patentansprüche

1. Leckdetektor mit zumindest einer Analysezelle (1), die mit der Belüftung einer ersten Sekundärpumpe (2) verbunden ist, einer Vorevakuierungsgruppe (5), die mit einem Eingangsflansch (13) verbunden ist, wobei die Belüftung der Vorevakuierungsgruppe (5) darüber hinaus mit einer Leitung (3) verbunden ist, die mit einem ersten Ventil (4) versehen ist, zur Stauung der ersten Sekundärpumpe (2), dadurch gekennzeichnet, dass die Vorevakuierungsgruppe (5) seriell verbunden eine zweite Sekundärpumpe (6) und eine erste mechanische Pumpe (7) umfasst, und dadurch, dass eine Leitung (9), die mit einem zweiten Ventil (10) versehen ist, einen Zwischenpunkt (8) der ersten Sekundärpumpe (2) mit der Belüftung der zweiten Sekundärpumpe (6) verbindet.

2. Leckdetektor nach Anspruch 1, dadurch gekennzeichnet, dass die erste mechanische Pumpe (7) eine Trockenpumpe ist.

3. Leckdetektor nach Anspruch 2, dadurch gekennzeichnet, dass die erste mechanische Pumpe (7) eine Membranpumpe ist.

4. Leckdetektor nach einem der Ansprüche 1 bis 3, dadurch gekennzeichnet, dass die ersten (2) und zweiten (6) Sekundärpumpen Hybridpumpen sind, die zwei Teile aufweisen: einen ersten Teil, auf der Belüftungsseite, vom turbomolekularen Typ mit Flügeln (17), und einen zweiten Teil, auf der Stauseite, vom Holweck-Typ (18, 19, 20).

5. Leckdetektor nach Anspruch 20, dadurch gkennzeichnet, dass der Zwischenpunkt (8) der ersten Sekundärpumpe (2) zwischen den zwei Teilen der Pumpe angeordnet ist.
